# EUROPEAN PATENT APPLICATION

(11) **EP 4 629 378 A1**
(43) Date of publication of application: **08.10.2025**
(21) Application number: 23929311.1
(22) Date of filing: 30.03.2023
(51) Int. Cl.: H01M 10/0525, H01M 10/0567

(54) **ELECTROLYTE FOR SODIUM-ION BATTERY, SODIUM-ION BATTERY CELL AND SECONDARY BATTERY**

(71) Applicant: Contemporary Amperex Technology (Hong Kong) Limited, Hong Kong (HK)
(72) Inventor: ZOU, Hailin, Ningde, Fujian 352100 (CN); TIE, Zhiwei, Ningde, Fujian 352100 (CN); CHEN, Peipei, Ningde, Fujian 352100 (CN)
(74) Representative: von Tietzen und Hennig, Nikolaus
(86) International application number: PCT/CN2023/085139
(87) International publication number: WO 2024/197714

(57) **Abstract**

An embodiment of this application provides an electrolyte for a sodium-ion battery, a sodium-ion battery cell, a secondary battery, and an electric apparatus, belonging to the field of battery technology. The electrolyte includes a first additive, and the first additive includes a compound represented by general formula (I), where R1, R2, R3, and R4 each independently include at least one of a single bond or an alkylene group having 1 to 4 carbon atoms, R5 includes (II) or (III), R6 includes at least one of (IV), (V), and (VI), and R7 includes at least one of a single bond, an alkylene group having 1 to 3 carbon atoms, and an alkoxyalkylene group having 1 to 3 carbon atoms. A technical solution of the embodiment of this application can improve performance of the sodium-ion battery.

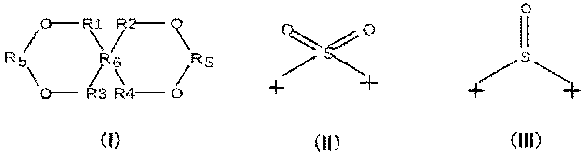

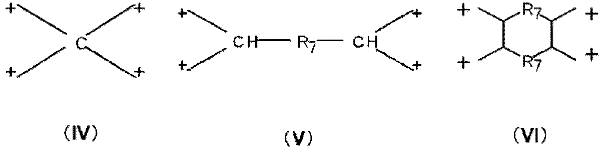

## Description

### TECHNICAL FIELD

This application relates to the field of battery technology, and more particularly, to an electrolyte for a sodium-ion battery, a sodium-ion battery cell, a secondary battery, and an electric apparatus.

### BACKGROUND

With increasing environmental pollution, the new energy industry has attracted growing attention. For the new energy industry, battery technologies are an important factor in connection with its development.

Due to abundant reserves and low cost of sodium salt raw materials, use of sodium-ion batteries has gradually gained attention. The electrolyte, as an important component of a sodium-ion battery, is critical to performance of the sodium-ion battery. Therefore, how to provide an electrolyte for a sodium-ion battery to improve performance of the sodium-ion battery is a technical problem urgently needing resolution.

### SUMMARY

This application is made in view of the above issues, with an objective of providing an electrolyte for a sodium-ion battery to improve performance of the sodium-ion battery.

To achieve the above objective, this application provides an electrolyte for a sodium-ion battery, a sodium-ion battery cell, a secondary battery, and an electric apparatus.

According to a first aspect, an electrolyte for a sodium-ion battery is provided, where the electrolyte includes a first additive, and the first additive includes a compound represented by general formula (I), 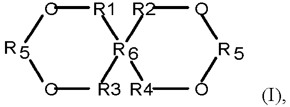 where R1, R2, R3, and R4 each independently include at least one of a single bond or an alkylene group having 1 to 4 carbon atoms, R5 includes 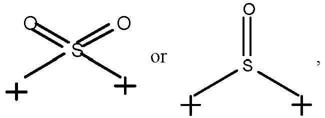 R6 includes at least one of 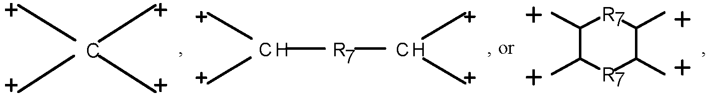 and R7 includes at least one of a single bond, an alkylene group having 1 to 3 carbon atoms, or an alkoxyalkylene group having 1 to 3 carbon atoms.

An embodiment of this application provides an electrolyte for a sodium-ion battery. The electrolyte includes a first additive, and the first additive includes a compound represented by general formula (I). The compound having a structure of general formula (I) can preferentially form a sulfite-rich interfacial passivation film on a surface of a positive electrode of a battery cell over a solvent of the electrolyte, where the interfacial passivation film can impede direct contact between the electrolyte and the surface of the positive electrode, thereby reducing a possibility of oxidation of the electrolyte; furthermore, sulfite is prone to oxidation, and the sulfite is oxidized preferentially over the electrolyte or the solvent in the electrolyte, thereby reducing the possibility of oxidation of the electrolyte. Due to a relatively long carbon chain in the compound (I), a risk of generating gaseous byproducts (such as ethylene) after oxidative decomposition of the compound (I) is reduced, thereby reducing gas production in the sodium-ion battery. Adding the compound represented by general formula (I) to the electrolyte is beneficial to improving lifespan of the sodium-ion battery and mitigating gas production phenomena. Therefore, a technical solution of the embodiment of this application is beneficial to improving performance of the sodium-ion battery.

In a possible implementation, based on a total mass of the electrolyte, a percentage W₁ of the first additive in the electrolyte is 0.01% to 5%; optionally, 0.05% to 5%; and further optionally, 0.1% to 2%.

When the percentage of the first additive is less than 0.01%, an interfacial passivation film formed on the surface of the positive electrode has a minimal inhibitory effect on oxidation of the electrolyte, resulting in little improvement in performance of the sodium-ion battery cell; when the percentage of the first additive exceeds 5%, more reaction products from oxidative decomposition may accumulate near the positive electrode of the sodium-ion battery cell , leading to an increase in internal resistance of the sodium-ion battery cell, which is detrimental to enhancing performance of the sodium-ion battery cell. Setting the percentage W₁ of the first additive in the electrolyte to 0.01% to 5% is beneficial to further enhancing performance of the sodium-ion battery cell.

Setting the percentage W₁ of the first additive in the electrolyte to 0.05% to 5% is beneficial to further enhancing performance of the sodium-ion battery cell, balancing lifespan and internal resistance of the sodium-ion battery cell. Setting the percentage W₁ of the first additive in the electrolyte to 0.1% to 2% can further balance lifespan and internal resistance of the sodium-ion battery cell.

In a possible implementation, the compound (I) includes at least one of the following compounds:

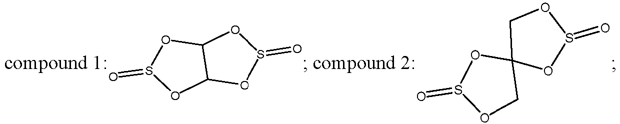

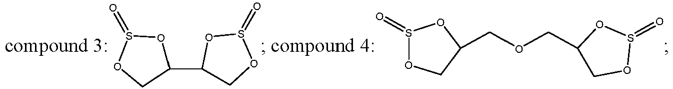

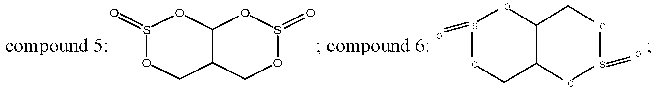

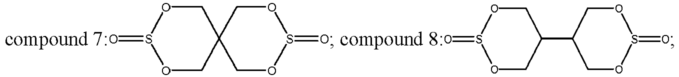

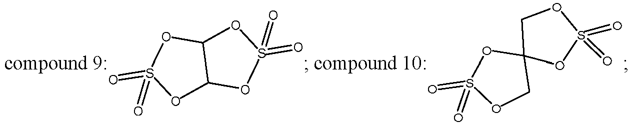

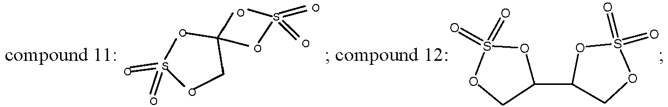

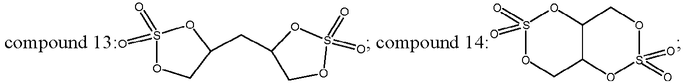

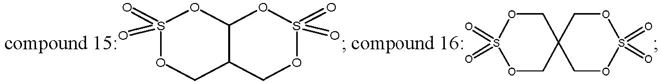

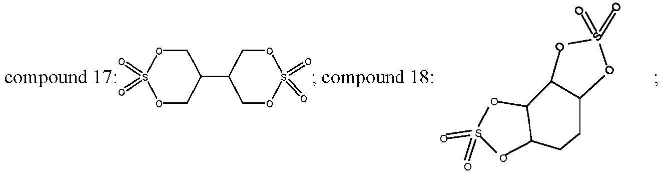

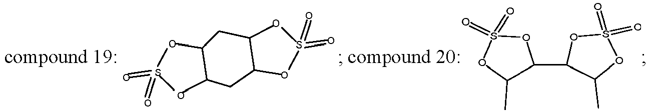

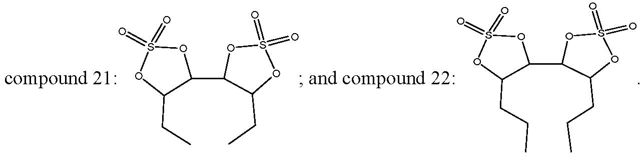

In the above technical solution, selecting any one of compounds 1 to 22 as the compound (I) is beneficial to further enhancing performance of the sodium-ion battery cell.

In a possible implementation, the compound (I) includes at least one of compounds 9 to 22; optionally, the compound (I) includes at least one of compound 11, compound 12, or compound 13.

In the electrolyte, a consumption rate of compounds 9 to 22 is lower compared to a consumption rate of compounds 1 to 8, which is beneficial to participation of compounds 9 to 22 in reactions, thereby further enhancing performance of the sodium-ion battery cell. Compounds 11, 12, and 13 have higher solubility in the solvent of the electrolyte, which is beneficial to participation of compounds 11, 12, and 13 in reactions, thereby further enhancing performance of the sodium-ion battery cell.

In a possible implementation, the electrolyte further includes a second additive, and the second additive includes at least one of fluoroethylene carbonate, vinylene carbonate, vinyl ethylene carbonate, 1,3-propanesultone, prop-1-ene-1,3-sultone, ethylene sulfate, maleic anhydride, difluorooxalatoborate, succinic anhydride, or triallyl phosphate.

In the above solution, the second additive can preferentially form an interfacial passivation film on a surface of a negative electrode over the solvent, which can suppress formation of easily soluble substances such as sodium alkyl carbonate, reduce side reactions between the solvent in the electrolyte and the negative electrode, and is beneficial to further improving lifespan of the sodium-ion battery cell.

In a possible implementation, based on the total mass of the electrolyte, a percentage W₂ of the second additive in the electrolyte is 0.01% to 10%; optionally, 0.1% to 5%.

When the percentage of the second additive is less than 0.01%, the interfacial passivation film formed by reaction of the second additive on the surface of the negative electrode is insufficient, resulting in little improvement in performance of the sodium-ion battery cell; when the percentage of the second additive exceeds 10%, the interfacial passivation film generated on the negative electrode of the sodium-ion battery cell becomes thicker, leading to an increase in internal resistance of the sodium-ion battery cell, which is detrimental to enhancing performance of the sodium-ion battery cell. Setting the percentage W₂ of the second additive in the electrolyte to 0.01% to 10% is beneficial to further enhancing performance of the sodium-ion battery cell. Setting the percentage W₂ of the second additive in the electrolyte to 0.1% to 5% can further enhance performance of the sodium-ion battery cell.

In a possible implementation, the percentage W₁ of the first additive in the electrolyte and the percentage W₂ of the second additive in the electrolyte satisfy: 0.05×10⁻⁴ ≤ W₁×W₂ ≤ 10×10⁻⁴. Setting the relationship between W₁ and W₂ to satisfy the above condition can improve lifespan of the sodium-ion battery while maintaining a low internal resistance of the battery.

In a possible implementation, the electrolyte further includes an electrolytic salt, and the electrolytic salt includes at least one of NaPF₆, NaBF₄, NaN(SO₂F)₂, NaClO₄, NaAsF₆, NaB(C₂O₄)₂, NaBF₂(C₂O₄), NaN(SO₂RF)₂, or NaN(SO₂F)(SO₂RF), where RF includes C_{b}F_{2b+1}, and b is an integer from 1 to 10; optionally, the electrolytic salt includes at least one of NaPF₆, NaN(SO₂F)₂, or NaBF₂(C₂O₄); optionally, b is an integer from 1 to 3; optionally, RF includes at least one of CF₃, C₂F₅, or CF₂CF₂CF₃. This allows flexible selection of an appropriate electrolytic salt according to actual needs.

In a possible implementation, the electrolyte further includes a solvent, and the solvent includes at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, diethyl sulfone, 1,3-dioxolane, tetrahydrofuran, ethylene glycol dimethyl ether, or acetonitrile; optionally, the solvent includes at least one of propylene carbonate, ethylene carbonate, ethyl methyl carbonate, diethyl carbonate, dimethyl carbonate, dipropyl carbonate, methyl propyl carbonate, ethyl propyl carbonate, or butylene carbonate. This allows flexible selection of a solvent according to actual needs.

According to a second aspect, a sodium-ion battery cell is provided, including the electrolyte according to the first aspect or any possible implementation thereof.

In a possible implementation, the sodium-ion battery cell further includes a positive electrode plate, and a positive electrode active material in the positive electrode plate includes at least one of a Prussian blue analogue, a sodium-containing phosphate, a sodium-containing transition metal oxide, or a respective modified compound thereof; optionally, the Prussian blue analogue includes a substance represented by a general formula NaP[R(CN)₆]_{δ}·zH₂O, where P and R each independently include at least one transition metal element, 0 < x ≤ 2, 0 < δ ≤ 1, and 0 ≤ z ≤ 10; optionally, the sodium-containing phosphate includes a substance represented by a general formula NaₑMe_{c}(PO₄)_{d}O₂X, where Me includes at least one transition metal element, X includes at least one halogen element, 0 < e ≤ 4, 0 < c ≤ 2, and 1 ≤ d ≤ 3; optionally, the sodium-containing transition metal oxide includes a substance represented by a general formula Na_{f}M_{g}FeₕO₂, where M includes at least one transition metal element, 0.67 < f < 1.1, 0.5 < g < 1, and 0 < h < 0.5; optionally, the transition metal element includes at least one of Ti, Cr, Mn, Fe, Co, Ni, V, Cu, or Zn; and optionally, the halogen element includes at least one of F, Cl, or Br. The electrolyte of the embodiment of this application can be applied to various battery cells, where the various battery cells include different positive electrode active materials. Optionally, the positive electrode active material of the battery cell includes a sodium-containing transition metal oxide, and the electrolyte can be applied to the battery cell including the sodium-containing transition metal oxide described above.

According to a third aspect, a secondary battery is provided, including the sodium-ion battery cell according to the second aspect.

According to a fourth aspect, an electric apparatus is provided, including the secondary battery according to the third aspect.

An embodiment of this application provides an electrolyte for a sodium-ion battery. The electrolyte includes a first additive, and the first additive includes a compound represented by general formula (I). The compound having a structure of general formula (I) can preferentially form a sulfite-rich interfacial passivation film on a surface of a positive electrode of a battery cell over a solvent of the electrolyte, where the interfacial passivation film can impede direct contact between the electrolyte and the surface of the positive electrode, thereby reducing a possibility of oxidation of the electrolyte; furthermore, sulfite is prone to oxidation, and the sulfite is oxidized preferentially over the electrolyte or the solvent in the electrolyte, thereby reducing the possibility of oxidation of the electrolyte. Due to a relatively long carbon chain in the compound (I), a risk of generating gaseous byproducts (such as ethylene) after oxidative decomposition of the compound (I) is reduced, thereby reducing gas production in the sodium-ion battery. Adding the compound represented by general formula (I) to the electrolyte is beneficial to improving lifespan of the sodium-ion battery and mitigating gas production phenomena. Therefore, a technical solution of the embodiment of this application is beneficial to improving performance of the sodium-ion battery.

### BRIEF DESCRIPTION OF DRAWINGS

FIG. 1 is a schematic diagram of a sodium-ion battery cell according to an embodiment of this application;
FIG. 2 is a schematic diagram of a battery module according to an embodiment of this application;
FIG. 3 is a schematic diagram of a secondary battery according to an embodiment of this application; and
FIG. 4 is a schematic diagram of an electric apparatus according to an embodiment of this application.

### DESCRIPTION OF EMBODIMENTS

Below, specific embodiments disclosing the electrolyte for a sodium-ion battery, the sodium-ion battery cell, the secondary battery, and the electric apparatus of this application are described in detail with appropriate reference to the drawings. However, there may be cases in which unnecessary detailed descriptions are omitted. For example, detailed descriptions of well-known matters and repeated descriptions of actually identical structures have been omitted. This is to avoid unnecessarily prolonging the following descriptions, for ease of understanding by persons skilled in the art. In addition, the accompanying drawings and the following descriptions are provided for persons skilled in the art to fully understand this application and are not intended to limit the subject described in the claims.

"Ranges" disclosed in this application are defined in the form of lower and upper limits. A given range is defined by one lower limit and one upper limit selected, where the selected lower and upper limits define boundaries of that special range. Ranges defined in this way may or may not include end values, and any combination may be used, meaning that any lower limit may be combined with any upper limit to form a range. For example, if ranges of 60-120 and 80-110 are provided for a specific parameter, ranges of 60-110 and 80-120 can also be envisioned. In addition, if low limit values of a range are given as 1 and 2, and upper limit values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein and "0-5" is just a short representation of combinations of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise stated, all the embodiments and optional embodiments of this application can be combined with each other to form new technical solutions.

Unless otherwise stated, all the technical features and optional technical features of this application can be combined with each other to form new technical solutions.

Unless otherwise specified, all the steps in this application can be performed sequentially or randomly, preferably, performed sequentially. For example, a method including steps (a) and (b) indicates that the method may include steps (a) and (b) performed sequentially or may include steps (b) and (a) performed sequentially. For example, the foregoing method may further include step (c), indicating that step (c) may be added to the method in any ordinal position, for example, the method may include steps (a), (b), and (c), steps (a), (c), and (b), steps (c), (a), and (b), or the like.

Unless otherwise specified, "include" and "comprise" mentioned in this application are inclusive or may be exclusive. For example, the terms "include" and "contain" can mean that other unlisted components may also be included or contained, or only listed components are included or contained.

Unless otherwise stated, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

A sodium-ion battery cell mentioned in this application is a smallest unit of a sodium-ion battery or a secondary battery. The sodium-ion battery or the secondary battery may include multiple sodium-ion battery cells.

Due to abundant reserves and low cost of sodium salt raw materials, use of sodium-ion batteries has gradually gained attention. However, compared to lithium-intercalation materials, sodium-intercalation materials have lower capacity and structural stability, resulting in lower energy density of sodium-ion batteries. Studies have found that increasing an operating voltage of a sodium-ion battery is beneficial to obtaining more active sodium, thereby improving energy density of the sodium-ion battery. This is because, when the operating voltage of the sodium-ion battery is increased, anionic oxygen participates in an electrochemical reaction, for example, the anionic oxygen undergoes a synergistic redox reaction with a transition metal in a positive electrode material, enhancing specific capacity of the positive electrode material.

However, during a process in which the anionic oxygen participates in the electrochemical reaction, due to strong oxidative activity of the anionic oxygen, the anionic oxygen can rapidly oxidize a solvent of the electrolyte, leading to rapid lifespan degradation of the sodium-ion battery accompanied by gas production phenomena, which is detrimental to enhancing performance of the sodium-ion battery. In some approaches, performance of the sodium-ion battery is improved by coating the positive electrode material or adding specific additives to the electrolyte. However, the above approaches do not significantly improve lifespan or gas production phenomena of the battery.

In view of this, in an embodiment of this application, an additive is added to the electrolyte of the sodium-ion battery, where the additive includes a cyclic sulfate compound or a cyclic sulfonate compound with a specific structure. These compounds can form an interfacial passivation film on a surface of a positive electrode, reducing a possibility of contact between the electrolyte and the surface of the positive electrode; furthermore, sulfite in the interfacial passivation film is prone to oxidation and can be oxidized preferentially over the solvent in the electrolyte, thereby reducing a risk of oxidation of the electrolyte, which is beneficial to enhancing performance of the sodium-ion battery.

Although some electrolytes for lithium-ion batteries may also include cyclic sulfate compounds or cyclic sulfonate compounds, since lithium-ion batteries do not face the above issues specific to sodium-ion batteries, the cyclic sulfate compounds or cyclic sulfonate compounds in the electrolytes for lithium-ion batteries are not used in sodium-ion batteries to address technical problems of sodium-ion batteries.

An embodiment of this application provides an electrolyte for a sodium-ion battery. The electrolyte includes a first additive, and the first additive includes a compound represented by general formula (I), 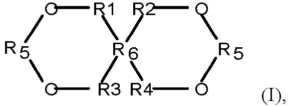 where R1, R2, R3, and R4 each independently include at least one of a single bond or an alkylene group having 1 to 4 carbon atoms, R5 includes 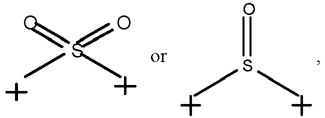 R6 includes at least one of 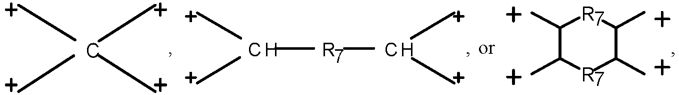 and R7 includes at least one of a single bond, an alkylene group having 1 to 3 carbon atoms, or an alkoxyalkylene group having 1 to 3 carbon atoms.

R1, R2, R3, and R4 each independently include at least one of a single bond or an alkylene group having 1 to 4 carbon atoms. This means that R1, R2, R3, and R4 may be different groups or the same group.

An alkylene group may refer to a divalent hydrocarbon group having one or more carbon atoms. The alkylene group having 1 to 4 carbon atoms may be a straight-chain or branched alkylene group having 1 to 4 carbon atoms. For example, methylene (-CH₂-), ethylene (-CH₂CH₂-), propylene (-CH₂CH₂CH₂-), butylene (-CH₂CH₂CH₂CH₂-), or isopropylidene.

A single bond may refer to a case where a group does not include carbon atoms. Taking R1 as a single bond as an example, R₆-R₁-O in general formula (I) can be represented as R₆-O.

When R7 is a single bond, 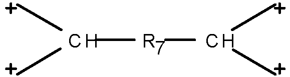 can be represented as 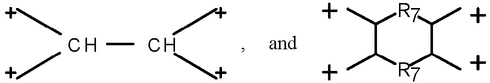 can be represented as 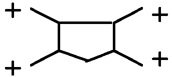 or

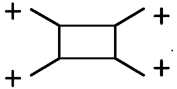

R7 includes an alkylene group having 1 to 3 carbon atoms, for example, R7 includes methylene (-CH₂-), ethylene (-CH₂CH₂-), or propylene (-CH₂CH₂CH₂-)-

An alkoxyalkylene group may refer to a group composed of one alkylene group and one oxygen atom. R7 includes an alkoxyalkylene group having 1 to 3 carbon atoms, for example, R7 includes methoxyalkylene (-CH₂O-), ethoxyalkylene (-C₂H₄O-), or propoxyalkylene (-C₃H₆O-).

The compound (I) is a cyclic sulfate compound or a cyclic sulfonate compound. The compound (I) can preferentially form a sulfite-rich interfacial passivation film on a surface of a positive electrode of a battery cell over a solvent of the electrolyte, where this sulfite-rich interfacial passivation film can impede direct contact between the electrolyte and the surface of the positive electrode, thereby reducing a possibility of oxidation of the electrolyte.

During a charge-discharge process of a sodium-ion battery cell, some substances with strong oxidative properties may appear, and these substances with strong oxidative properties can react with the electrolyte or the solvent in the electrolyte, leading to oxidation of the electrolyte. For example, for a sodium-ion battery cell whose positive electrode material includes a transition metal oxide, during the charge-discharge process of the sodium-ion battery, anionic oxygen (also referred to as oxygen ions) may be generated. The interfacial passivation film generated by the compound (I) contains a significant amount of sulfite, and the sulfite preferentially binds with the anionic oxygen, reducing oxidative activity of the anionic oxygen, thereby reducing an oxidative capacity of the surface of the positive electrode on the electrolyte and decreasing the possibility of oxidation of the electrolyte.

The compound (I) has a large molecular structure with weak coordination with sodium ions. Therefore, consumption of the compound (I) on a negative electrode side is minimal (for example, during a formation stage, consumption of the compound (I) on the negative electrode side is minimal), allowing the first additive to retain more of the compound (I) to form the interfacial passivation film on the surface of the positive electrode. Furthermore, due to a relatively long carbon chain in the compound (I), a risk of generating gaseous byproducts (such as ethylene) after oxidative decomposition of the compound (I) is reduced, thereby reducing gas production in the sodium-ion battery.

In the embodiment of this application, the compound represented by general formula (I) is added to the electrolyte. On one hand, this can reduce the risk of oxidation of the electrolyte, which is beneficial to improving lifespan of the sodium-ion battery; on the other hand, the compound (I) has a lower risk of generating gaseous byproducts after oxidative decomposition, which can reduce gas production in the sodium-ion battery. Therefore, the technical solution of the embodiment of this application is beneficial to enhancing performance of the sodium-ion battery cell.

In some embodiments, based on a total mass of the electrolyte, a percentage W₁ of the first additive in the electrolyte is 0.01% to 5%; optionally, 0.05% to 5%; and further optionally, 0.1% to 2%.

The percentage of the first additive in the electrolyte refers to a mass ratio of the first additive to the electrolyte in the sodium-ion battery cell.

The percentage of the first additive in the electrolyte can be determined using a gas chromatograph or a liquid chromatograph. The structure of the first additive can be determined using a gas mass spectrometer or a liquid mass spectrometer.

When the percentage of the first additive is less than 0.01%, an interfacial passivation film formed on the surface of the positive electrode has a minimal inhibitory effect on oxidation of the electrolyte, resulting in little improvement in performance of the sodium-ion battery cell; when the percentage of the first additive exceeds 5%, more reaction products generated from oxidative decomposition of the compound (I) may accumulate near the positive electrode of the sodium-ion battery cell, increasing resistance between a positive electrode active material layer and an electrolyte interface, leading to an increase in internal resistance of the sodium-ion battery cell, which is detrimental to enhancing performance of the sodium-ion battery cell.

In the above embodiments, setting the percentage W₁ of the first additive in the electrolyte to 0.01% to 5% is beneficial to further enhancing performance of the sodium-ion battery.

The percentage W₁ of the first additive in the electrolyte is 0.05% to 5%, which is beneficial to further enhancing performance of the sodium-ion battery cell, balancing lifespan and internal resistance of the sodium-ion battery cell.

The percentage W₁ of the first additive in the electrolyte is 0.1% to 2%, which can further balance lifespan and internal resistance of the sodium-ion battery cell.

In some embodiments, the compound (I) includes at least one of the following compounds:

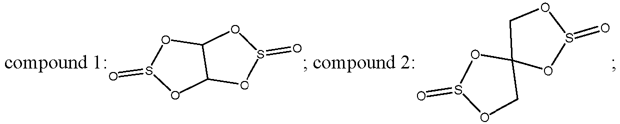

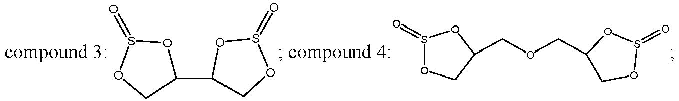

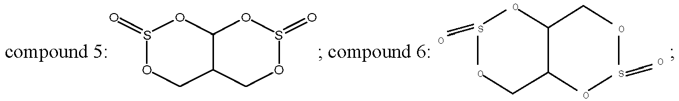

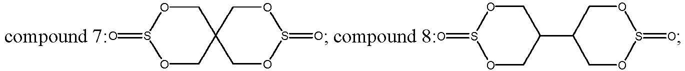

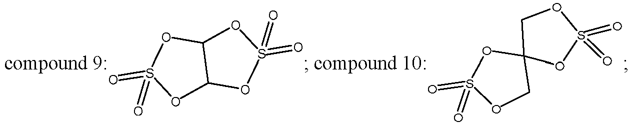

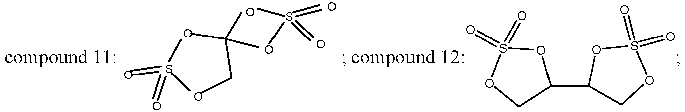

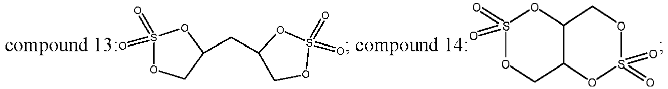

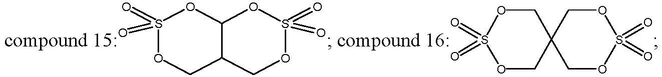

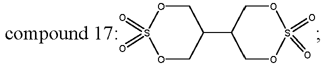

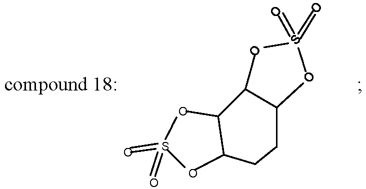

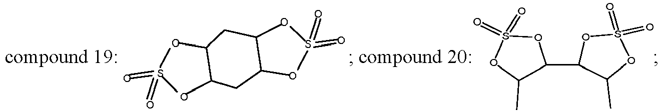

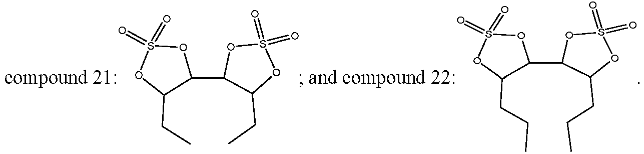

In the above embodiments, selecting any one of compounds 1 to 22 as the compound (I) is beneficial to enhancing lifespan of the sodium-ion battery cell and controlling gas production in the sodium-ion battery cell.

In some embodiments, the compound (I) includes at least one of compounds 9 to 22; optionally, the compound (I) includes at least one of compound 11, compound 12, or compound 13.

For compound 11, R5 is 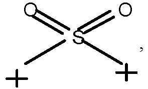 R1, R2, and R4 are single bonds, R3 is methylene, and R6 is

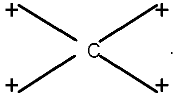

For compound 12, R5 is 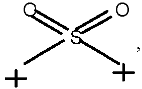 R1 and R2 are single bonds, R3 and R4 are methylene, and R6 is

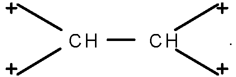

For compound 13, R5 is 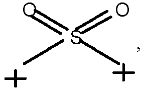 R1 and R2 are single bonds, R3 and R4 are methylene, and R6 is

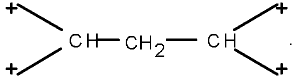

Similarly, specific groups included in compounds 1 to 10 and 14 to 22 can be determined with reference to the structural formula of the compound (I), and are not described one by one here.

In the electrolyte, a consumption rate of compounds 9 to 22 is lower compared to a consumption rate of compounds 1 to 8, which is beneficial to participation of compounds 9 to 22 in reactions, thereby further enhancing performance of the sodium-ion battery cell.

Compounds 11, 12, and 13 have higher solubility in the solvent of the electrolyte, which is beneficial to participation of compounds 11, 12, and 13 in reactions, thereby further enhancing performance of the sodium-ion battery cell.

In some embodiments, the electrolyte further includes a second additive, and the second additive includes at least one of fluoroethylene carbonate (Fluoroethylene carbonate, FEC), vinylene carbonate (Vinylene carbonate, VC), vinyl ethylene carbonate (Vinyl ethylene carbonate, VEC), 1,3-propanesultone (1,3-Propanesultone, PS), prop-1-ene-1,3-sultone (Prop-1-ene-1,3-sultone, PST), ethylene sulfate (Ethylene sulfate, DTD), maleic anhydride, difluorooxalatoborate, succinic anhydride, or triallyl phosphate.

In some sodium-ion battery cells, main components of an interfacial passivation film formed on a surface of a negative electrode include sodium alkyl carbonate, sodium carbonate, and the like. Compared to lithium alkyl carbonate, sodium alkyl carbonate has greater solubility in a solvent, resulting in an unstable interfacial passivation film formed on the surface of the negative electrode in the sodium-ion battery cell. In this case, the electrolyte continuously reacts with the negative electrode, which is detrimental to improving lifespan of the sodium-ion battery cell.

In the embodiments of this application, since the second additive contains unsaturated functional groups, the second additive can be reduced on the surface of the negative electrode preferentially over the solvent to form an interfacial passivation film, which can suppress formation of easily soluble substances such as sodium alkyl carbonate, reduce side reactions between the solvent in the electrolyte and the negative electrode, and is beneficial to further enhancing lifespan of the sodium-ion battery cell.

In some embodiments, based on the total mass of the electrolyte, a percentage W₂ of the second additive in the electrolyte is 0.01% to 10%; optionally, 0.1% to 5%.

When the percentage of the second additive is less than 0.01%, an interfacial passivation film formed by reaction of the second additive on the surface of the negative electrode is insufficient, resulting in little improvement in performance of the sodium-ion battery cell; when the percentage of the second additive exceeds 10%, an interfacial passivation film generated on the negative electrode of the sodium-ion battery cell becomes thicker, increasing resistance between a negative electrode active material layer and the electrolyte, thereby leading to an increase in internal resistance of the sodium-ion battery cell, which is detrimental to enhancing performance of the sodium-ion battery cell. Setting the percentage W₂ of the second additive in the electrolyte to 0.01% to 10% is beneficial to further enhancing performance of the sodium-ion battery cell.

The percentage W₂ of the second additive in the electrolyte is 0.1% to 5%, which can further enhance performance of the sodium-ion battery cell.

In some embodiments, the percentage W₁ of the first additive in the electrolyte and the percentage W₂ of the second additive in the electrolyte satisfy: 0.05×10⁻⁴ ≤ W₁×W₂ ≤ 10×10⁻⁴.

In the electrolyte, addition of both the first additive and the second additive affects internal resistance of the sodium-ion battery cell. In the above embodiments, setting the relationship between W₁ and W₂ to satisfy the above condition can improve lifespan of the sodium-ion battery cell while maintaining a low internal resistance of the battery.

In some embodiments, the electrolyte further includes an electrolytic salt, and the electrolytic salt includes at least one of NaPF₆, NaBF₄, NaN(SO₂F)₂, NaClO₄, NaAsF₆, NaB(C₂O₄)₂, NaBF₂(C₂O₄), NaN(SO₂RF)₂, or NaN(SO₂F)(SO₂RF), where RF includes C_{b}F_{2b+1}, and b is an integer from 1 to 10; optionally, the electrolytic salt includes at least one of NaPF₆, NaN(SO₂F)₂, or NaBF₂(C₂O₄); optionally, b is an integer from 1 to 3; and optionally, RF includes at least one of CF₃, C₂F₅, or CF₂CF₂CF₃. This allows flexible selection of an appropriate electrolytic salt according to actual needs.

In some embodiments, the electrolyte further includes a solvent, and the solvent includes at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, diethyl sulfone, 1,3-dioxolane, tetrahydrofuran, ethylene glycol dimethyl ether, or acetonitrile; optionally, the solvent includes at least one of ethylene carbonate, propylene carbonate, ethyl methyl carbonate, diethyl carbonate, dimethyl carbonate, dipropyl carbonate, methyl propyl carbonate, ethyl propyl carbonate, or butylene carbonate. This allows flexible selection of a solvent according to actual needs.

### [Positive electrode plate]

A positive electrode plate typically includes a positive electrode current collector and a positive electrode film layer disposed on at least one surface of the positive electrode current collector, where the positive electrode film layer includes a positive electrode active material.

For example, the positive electrode current collector includes two opposite surfaces in its thickness direction, and the positive electrode film layer is disposed on either or both of the two opposite surfaces of the positive electrode current collector.

In some embodiments, the positive electrode current collector may be a metal foil current collector or a composite current collector. For example, aluminum foil may be used as the metal foil. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, silver alloy, or the like) on a polymer material substrate (for example, a substrate of polypropylene, polyethylene terephthalate, polybutylene terephthalate, polystyrene, or polyethylene).

In some embodiments, the positive electrode active material may adopt a positive electrode active material known in the art for sodium-ion batteries.

In some embodiments, the positive electrode film layer further optionally includes a binder. For example, the binder may include at least one of polyvinylidene fluoride, polytetrafluoroethylene, vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorine-containing acrylate resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, or carbon nanofiber.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to produce a positive electrode slurry; and the positive electrode slurry is applied onto the positive electrode current collector, followed by processes such as drying and cold pressing to obtain the positive electrode plate.

### [Negative electrode plate]

The negative electrode plate includes a negative electrode current collector and a negative electrode film layer disposed on at least one surface of the negative electrode current collector, where the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, the metal foil may be a copper foil. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, silver alloy, or the like) on a polymer material substrate (for example, a substrate of polypropylene, polyethylene terephthalate, polybutylene terephthalate, polystyrene, or polyethylene).

In some embodiments, the negative electrode active material may be a well-known negative electrode active material used for batteries in the art. For example, the negative electrode active material may include at least one of the following materials: artificial graphite, natural graphite, soft carbon, hard carbon, silicon-based material, tin-based material, or lithium titanate. The silicon-based material may be selected from at least one of elemental silicon, silicon-oxygen compounds, silicon-carbon composites, silicon-nitrogen composites, or silicon alloys. The tin-based material may be selected from at least one of elemental tin, tin-oxygen compound, or tin alloy. However, this application is not limited to these materials, but may use other conventional materials that can be used as negative electrode active materials for batteries instead. One of these negative electrode active materials may be used alone, or two or more of them may be used in combination.

In some embodiments, the negative electrode film layer further optionally includes a binder. For example, the binder may be selected from at least one of styrene-butadiene rubber (Styrene, 1,3-butadiene polymer, SBR), polyacrylic acid (Polyacrylic acid, PAA), sodium polyacrylate (Sodium polyacrylate, PAAS), polyacrylamide (Polyacrylamide, PAM), polyvinyl alcohol (Polyvinyl alcohol, PVA), sodium alginate (Sodium alginate, SA), polymethacrylic acid (Polymethacrylic acid, PMAA), or carboxymethyl chitosan (Carboxymethyl chitosan, CMCS).

In some embodiments, the negative electrode film layer further optionally includes a conductive agent. For example, the conductive agent may be selected from at least one of superconducting carbon, acetylene black, carbon black, Ketjen black, carbon dots, carbon nanotubes, graphene, or carbon nanofiber.

In some embodiments, the negative electrode film layer further optionally includes other additives, such as a thickener (for example, sodium carboxymethyl cellulose (Sodium Carboxymethyl Cellulose, CMC-Na)).

In some embodiments, the negative electrode plate may be prepared in the following manner: the foregoing constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

### [Separator]

This application imposes no particular limitation on a type of a separator, and any well-known porous structure separator with good chemical stability and mechanical stability may be selected.

In some embodiments, a material of the separator may be selected from at least one of glass fiber, non-woven fabric, polyethylene, polypropylene, or polyvinylidene fluoride. The separator may be a single-layer film or a multilayer composite film, with no particular limitation. When the separator is a multilayer composite film, materials of the layers may be the same or different, with no particular limitation.

### [Sodium-ion battery cell]

This application provides a sodium-ion battery cell including the electrolyte according to any of the above embodiments.

The sodium-ion battery is not limited to any particular shape in this application, and may be cylindrical, rectangular, or of any other shape.

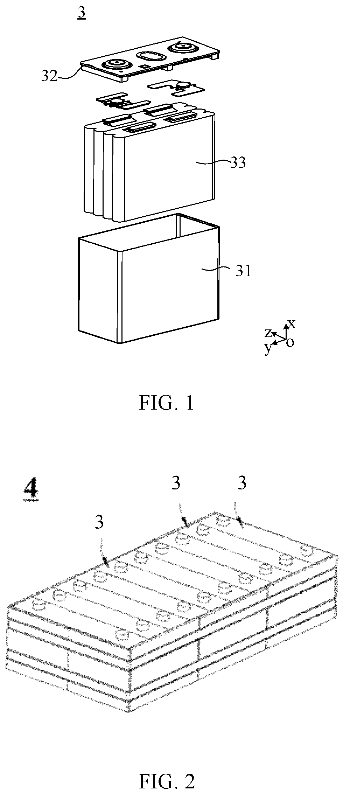

FIG. 1 is a schematic diagram of a sodium-ion battery cell according to an embodiment of this application. As shown in FIG. 1, the sodium-ion battery cell 3 includes a casing 31, a cover plate 32, and an electrode assembly 33 disposed within the casing 31.

The casing 31 and the cover plate 32 may be configured to encapsulate the electrode assembly 33 and the electrolyte.

In some embodiments, the casing 31 and the cover plate 32 may be a hard shell, such as a hard plastic shell, an aluminum shell, or a steel shell. The casing 31 and the cover plate 32 may also be a pouch, such as a pouch-type soft package. A material of the pouch may be plastic, including, for example, polypropylene, polybutylene terephthalate, or polybutylene succinate.

The electrode assembly 33 includes a positive electrode plate, a negative electrode plate, and a separator, and the electrode assembly 33 may be formed by the positive electrode plate, the negative electrode plate, and the separator through a winding process or a stacking process.

Optionally, a surface of a negative electrode in the embodiment of this application may refer to a surface at a position corresponding to the negative electrode plate of the electrode assembly 33; more specifically, the surface may refer to a surface of the negative electrode plate, or further, a surface of a negative electrode film layer of the negative electrode plate. Similarly, a surface of a positive electrode in the embodiment of this application may refer to a surface at a position corresponding to the positive electrode plate of the electrode assembly 33; more specifically, the surface may refer to a surface of the positive electrode plate, or further, a surface of a positive electrode film layer of the positive electrode plate.

Optionally, the sodium-ion battery cell 3 is an "anode-free" sodium-ion battery cell, or more specifically, an "anode-free" sodium metal battery cell. For an "anode-free" sodium-ion battery cell, no negative electrode active material is disposed on a negative electrode current collector.

In some embodiments, the sodium-ion battery cell may be assembled into a battery module, and the number of sodium-ion battery cells included in the battery module may be one or more, where the specific number may be selected by persons skilled in the art based on an application and capacity of the battery module.

FIG. 2 is a schematic diagram of a battery module according to an embodiment of this application. Referring to FIG. 2, in the battery module 4, multiple sodium-ion battery cells 3 may be arranged sequentially along a length direction of the battery module 4. Alternatively, the multiple sodium-ion battery cells 3 may be arranged in any other manner. Further, the multiple sodium-ion battery cells 3 may be fixed by fasteners.

Optionally, the battery module 4 may further include a housing with an accommodating space, and the multiple sodium-ion battery cells 3 are accommodated in the accommodating space.

In some embodiments, the sodium-ion battery cell further includes a positive electrode plate, and a positive electrode active material in the positive electrode plate includes at least one of a Prussian blue analogue, a sodium-containing phosphate, a sodium-containing transition metal oxide, or a respective modified compound thereof. In these embodiments, the sodium-ion battery cell includes the electrolyte described above and the positive electrode active material, and the first additive in the electrolyte can form a sulfite-rich passivation film on a surface of the positive electrode, thereby reducing direct contact between a solvent of the electrolyte and the surface of the positive electrode (or the positive electrode active material), which in turn can reduce a possibility of oxidation of the solvent in the electrolyte.

A modified compound may refer to an improvement made to enhance specific properties of the above positive electrode active material. For example, the positive electrode active material may be modified by surface coating to improve stability of the positive electrode active material. Alternatively, the positive electrode active material may be modified by ion doping. It should be noted that the embodiment of this application includes but is not limited to the above modifications.

Optionally, the Prussian blue analogue includes a substance represented by a general formula NaₓP[R(CN)₆]_{δ}·zH₂O, where P and R each independently include at least one transition metal element, 0 < x ≤ 2, 0 < δ ≤ 1, and 0 ≤ z ≤ 10. In some embodiments, the Prussian blue analogue may be Na₂Ni_{0.17}Co_{0.83}Fe(CN)₆.

Optionally, the sodium-containing phosphate includes a substance represented by a general formula NaₑMe_{c}(PO₄)_{d}O₂X, where Me includes at least one transition metal element, X includes at least one halogen element, 0 < e ≤ 4, 0 < c ≤ 2, and 1 ≤ d ≤ 3. In some embodiments, the sodium-containing phosphate may be Na₃V₂(PO₄)₂O₂F.

Optionally, the sodium-containing transition metal oxide includes a substance represented by a general formula Na_{f}M_{g}FeₕO₂, where M includes at least one transition metal element, 0.67 < f < 1.1, 0.5 < g < 1, and 0 < h < 0.5. For example, the sodium-containing transition metal oxide may be Na_{0.88}Cu_{0.24}Fe_{0.29}Mn_{0.47}O₂.

Optionally, the transition metal element includes at least one of Ti, Cr, Mn, Fe, Co, Ni, V, Cu, or Zn.

Optionally, the halogen element includes at least one of F, Cl, or Br.

Optionally, the positive electrode active material in the sodium-ion battery cell includes a sodium-containing transition metal oxide. During a charge-discharge process of the sodium-ion battery cell, due to presence of the sodium-containing transition metal oxide, anionic oxygen may be generated. Since the first additive is added to the electrolyte, the interfacial passivation film generated on the surface of the positive electrode includes sulfite, and the sulfite can bind with the anionic oxygen preferentially over the solvent in the electrolyte, thereby reducing a possibility of oxidation of the electrolyte.

### [Secondary battery]

This application provides a secondary battery including the sodium-ion battery cell described in the above embodiments.

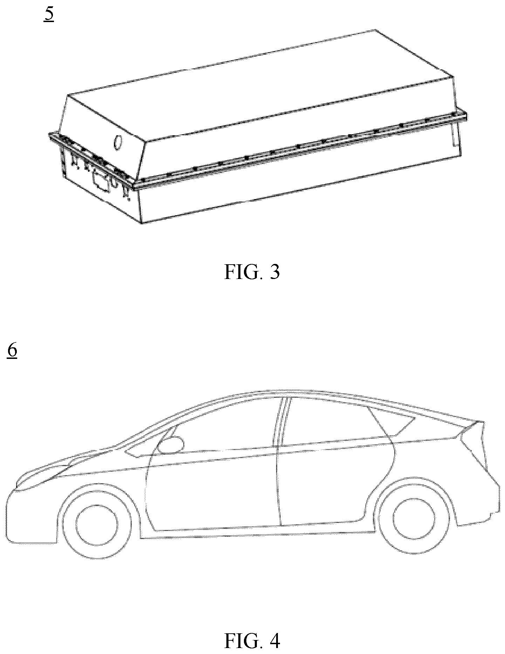

FIG. 3 is a schematic diagram of a secondary battery according to an embodiment of this application. As shown in FIG. 3, this application provides a secondary battery 5 including the sodium-ion battery cell 3 according to any of the above embodiments.

The sodium-ion battery cell 3 may directly constitute the secondary battery 5, or may first constitute a battery module, and then multiple battery modules may constitute the secondary battery 5.

### [Electric apparatus]

This application provides an electric apparatus including the secondary battery described in the above embodiments.

FIG. 4 is a schematic diagram of an electric apparatus according to an embodiment of this application. As shown in FIG. 4, this application provides an electric apparatus 6 including the secondary battery 5 according to the above embodiments.

The following describes examples of this application. The examples described below are illustrative and only used to explain this application, and cannot be construed as limitations on this application. Examples whose technical solutions or conditions are not specified are made in accordance with technical solutions or conditions described in literature in the art, or made in accordance with product instructions. The reagents or instruments used are all conventional products that are commercially available if no manufacturer is indicated.

### [Examples]

### Example 1

In Example 1, the electrolyte included 1 mol/L electrolytic salt NaPF₆, a solvent, and a first additive. The solvent was a mixture of propylene carbonate (PC) and ethyl methyl carbonate (EMC) in a volume ratio of 3:7; and based on a total mass of the electrolyte, a percentage W₁ of the first additive in the electrolyte was 3%.

The first additive was compound 12, with a structural formula of

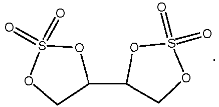

### Examples 2 to 10

Examples 2 to 10 differed from Example 1 in that: the percentage W₁ of the first additive was different.

In Examples 2 to 10, the percentage W1 of the first additive was respectively: 0.01%, 0.05%, 0.1%, 0.5%, 1%, 2%, 4%, 5%, and 10%.

### Examples 11 to 16

Examples 11 to 16 differed from Example 1 in that: structures of specific compounds in the first additives were different.

### Example 11:

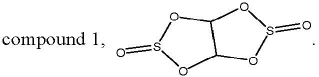

### Example 12:

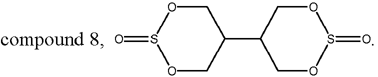

### Example 13:

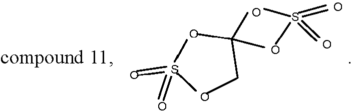

### Example 14:

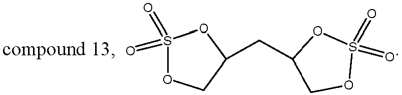

### Example 15:

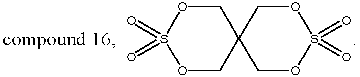

### Example 16:

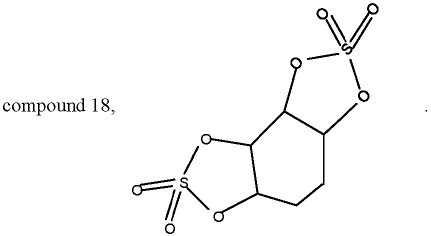

### Example 17

Example 17 differed from Example 1 in that: the electrolyte further included a second additive, the second additive was fluoroethylene carbonate (FEC), and based on a total mass of the electrolyte, a percentage W₂ of the second additive was 2% (2% can also be expressed as 0.02), with W₁×W₂ being 6×10⁻⁴.

### Examples 18 to 26

Examples 18 to 26 differed from Example 17 in that: the percentage W2 of the second additive was different.

In Examples 18 to 26, the percentage W2 of the second additive was respectively: 0.01%, 0.05%, 0.1%, 0.5%, 1%, 3%, 4%, 5%, and 10%, and W₁×W₂ was respectively 0.03×10⁻⁴, 0.15×10⁻⁴, 0.3×10⁻⁴, 1.5×10⁻⁴, 3×10⁻⁴, 9×10⁻⁴, 12×10⁻⁴, 15×10⁻⁴, and 30×10⁻⁴.

### Example 27

Example 27 differed from Example 17 in that: the percentage W₁ of the first additive and the percentage W₂ of the second additive were different. The percentage W₁ of the first additive was 5%, the percentage W₂ of the second additive was 0.01%, and W₁×W₂ was 0.05×10⁻⁴.

### Example 28

Example 28 differed from Example 17 in that: the percentage W₁ of the first additive and the percentage W₂ of the second additive were different. The percentage W₁ of the first additive was 2%, the percentage W₂ of the second additive was 5%, and W₁×W₂ was 10×10⁻⁴.

### Examples 29 to 30

Examples 29 to 30 differed from Example 17 in that: the second additives were different.

In Examples 29 to 30, the second additives were respectively: vinylene carbonate (VC) and ethylene sulfate (DTD).

### Comparative example 1

In Comparative example 1, the electrolyte did not include the first additive or the second additive according to the embodiment of this application. In Comparative example 1, an electrolytic salt in the electrolyte was NaPF₆, a solvent was a mixture of propylene carbonate and ethyl methyl carbonate in a volume ratio of 3:7, and a concentration of the electrolytic salt was 1 mol/L.

### Comparative example 2

Comparative example 2 differed from Comparative example 1 in that: the electrolyte included ethylene sulfate, and based on a total mass of the electrolyte, a percentage of ethylene sulfate in the electrolyte was 1%.

### [Preparation method of electrolyte]

Ethylene carbonate and ethyl methyl carbonate were first mixed in a volume ratio of 3:7 to obtain a mixed solvent, then the mixed solvent, an additive, and NaPF₆ were mixed and stirred in a weight ratio of (1-w-0.138):w:0.138, where w was a mass percentage of the additive. After complete dissolution, the desired electrolyte was obtained.

### [Preparation of sodium-ion battery cell]

An active material Na_{0.88}Cu_{0.24}Fe_{0.29}Mn_{0.47}O₂, a conductive agent acetylene black, and a binder polyvinylidene fluoride (PVDF) were thoroughly mixed in a weight ratio of 90:5:5 in an N-methylpyrrolidone solvent system to obtain a uniform positive electrode slurry; the positive electrode slurry was evenly applied onto a positive electrode current collector aluminum foil with a thickness of 13 µm in an amount of 0.28 g (dry weight)/1540.25 mm²; and the aluminum foil was air-dried at room temperature and then transferred to an oven at 120°C for drying for 1 hour, followed by cold pressing and slitting to obtain a positive electrode plate.

An active material hard carbon, a conductive agent acetylene black, a binder styrene-butadiene rubber, and a thickener sodium carboxymethyl cellulose were thoroughly mixed in a weight ratio of 90:4:4:2 in a deionized water solvent system to obtain a uniform negative electrode slurry; the negative electrode slurry was evenly applied onto a negative electrode current collector aluminum foil with a thickness of 13 µm in an amount of 0.14 g (dry weight)/1540.25 mm²; and the copper foil was air-dried at room temperature and then transferred to an oven at 120°C for drying for 1 hour, followed by cold pressing and slitting to obtain a negative electrode plate.

A separator adopted a polyethylene (Polyethylene, PE) porous polymer film with a thickness of 9 µm.

The positive electrode plate, the separator, and the negative electrode plate were stacked in sequence, such that the separator was sandwiched between the positive electrode plate and the negative electrode plate for separation, and the stacked product was wound to obtain an electrode assembly. The electrode assembly was placed in a casing, the prepared electrolyte was injected, and encapsulation was performed to obtain a sodium-ion battery cell.

### [Testing of additive type and amount]

A type of the first additive and the second additive could be determined using a gas mass spectrometer (also referred to as a gas chromatography-mass spectrometry instrument) or a liquid mass spectrometer. A percentage of the first additive and the second additive in the electrolyte could be determined using a gas chromatograph or a liquid chromatograph.

For example, a sample could be placed in a liquid mass spectrometer, and a specific type of additive in the sample was determined through qualitative analysis by the instrument. Subsequently, a percentage of the additive in the sample was determined using a liquid chromatograph.

### [Cycling performance test]

At 25°C, a freshly prepared sodium-ion battery cell was left to stand for 5 minutes, charged at a constant current of 1C rate to 4.2 V, then charged at a constant voltage until a current was less than or equal to 0.05C, subsequently left to stand for 5 minutes, and then discharged at a constant current of 1C rate to 1.5 V, constituting one charge-discharge cycle, where a discharge capacity of this cycle was recorded as a discharge capacity of a first cycle of the sodium-ion battery cell. The sodium-ion battery cell underwent 800 charge-discharge cycles according to the above method, and a discharge capacity of each cycle was recorded.

Capacity retention rate of the sodium-ion battery cell after 400 cycles at 25°C and 1C/1C = discharge capacity of an 800th cycle / discharge capacity of the first cycle × 100%.

### [Direct current resistance test]

At 25°C, a sodium-ion battery cell was left to stand for 5 minutes, charged at a constant current of 1C rate to 4.2 V, and then charged at a constant voltage until a current was less than or equal to 0.05C, at which point a state of charge (State of charge, SOC) of the battery was 100%. Subsequently, the battery was left to stand for 5 minutes, and then discharged at a constant current of 1C rate for 30 minutes, adjusting the state of charge (SOC) of the sodium-ion battery cell to 50%.

The sodium-ion battery cell at 50% SOC was further left to stand for 10 minutes and discharged at a constant current of 4C rate for 30 seconds. A voltage U₁ at a last second of standing, a voltage U₂ at a last second of constant-current discharge at 4C rate, and a current I of the constant-current discharge at 4C rate were recorded. Direct current resistance R of the sodium-ion battery cell at 25°C, 50% SOC, and 4C rate constant-current discharge for 30 seconds = (U1 - U2) / I.

### [Volume swelling rate test]

At 25°C, a sodium-ion battery cell was charged at a constant current of 1C to a voltage of 4.2 V, then charged at a constant voltage of 4.2 V until a current was 0.05C, at which point a volume of the sodium-ion battery cell was measured and recorded as V₁; then, the fully charged sodium-ion battery cell was placed in a constant-temperature chamber at 60°C and stored for 2 months; and a volume was measured using a drainage method and recorded as V₂.

Volume expansion rate of the sodium-ion battery cell after storage at 60°C for 2 months = (V2 - V1) / V1 × 100%.

Experimental data of the examples and comparative examples are shown in Table 1. In Table 1, A represents a capacity retention rate of a sodium-ion battery cell, R represents a direct current resistance of a sodium-ion battery cell, and B represents a volume swelling rate of a sodium-ion battery cell. In Table 1, specific structural formulas of compounds can be referred to as described above.

**Table 1 Experimental data of examples and comparative examples**

| | First additive | W₁ (%) | Second additive | W₂ (%) | W₁xW₂ (10⁻⁴) | Electrolytic salt | Solvent | A (%) | R (Ω) | B (%) |
|---|---|---|---|---|---|---|---|---|---|---|
| Example 1 | Compound 12 | 3 | / | / | / | NaPF₆ | PC:EMC 3:7 | 91 | 0.345 | 10 |
| Example 2 | Compound 12 | 0.01 | / | / | / | NaPF₆ | PC:EMC 3:7 | 65 | 0.35 | 40 |
| Example 3 | Compound 12 | 0.05 | / | / | / | NaPF₆ | PC:EMC 3:7 | 68 | 0.342 | 37 |
| Example 4 | Compound 12 | 0.1 | / | / | / | NaPF₆ | PC:EMC 3:7 | 73 | 0.332 | 32 |
| Example 5 | Compound 12 | 0.5 | / | / | / | NaPF₆ | PC:EMC 3:7 | 77 | 0.334 | 28 |
| Example 6 | Compound 12 | 1 | / | / | / | NaPF₆ | PC:EMC 3:7 | 79 | 0.339 | 21 |
| Example 7 | Compound 12 | 2 | / | / | / | NaPF₆ | PC:EMC 3:7 | 88 | 0.342 | 15 |
| Example 8 | Compound 12 | 4 | / | / | / | NaPF₆ | PC:EMC 3:7 | 90 | 0.368 | 8 |
| Example 9 | Compound 12 | 5 | / | / | / | NaPF₆ | PC:EMC 3:7 | 85 | 0.379 | 5 |
| Example 10 | Compound 12 | 10 | / | / | / | NaPF₆ | PC:EMC 3:7 | 78 | 0.496 | 2 |
| Example 11 | Compound 1 | 3 | / | / | / | NaPF₆ | PC:EMC 3:7 | 90 | 0.342 | 9 |
| Example 12 | Compound 8 | 3 | / | / | / | NaPF₆ | PC:EMC 3:7 | 89 | 0.348 | 11 |
| Example 13 | Compound 11 | 3 | / | / | / | NaPF₆ | PC:EMC 3:7 | 91 | 0.335 | 13 |
| Example 14 | Compound 13 | 3 | / | / | / | NaPF₆ | PC:EMC 3:7 | 87 | 0.342 | 12 |
| Example 15 | Compound 16 | 3 | / | / | / | NaPF₆ | PC:EMC 3:7 | 92 | 0.352 | 10 |
| Example 16 | Compound 18 | 3 | / | / | / | NaPF₆ | PC:EMC 3:7 | 90 | 0.351 | 7 |
| Example 17 | Compound 12 | 3 | FEC | 2 | 6 | NaPF₆ | PC:EMC 3:7 | 95 | 0.352 | 11 |
| Example 18 | Compound 12 | 3 | FEC | 0.01 | 0.03 | NaPF₆ | PC:EMC 3:7 | 91 | 0.348 | 10 |
| Example 19 | Compound 12 | 3 | FEC | 0.05 | 0.15 | NaPF₆ | PC:EMC 3:7 | 91 | 0.348 | 10 |
| Example 20 | Compound 12 | 3 | FEC | 0.1 | 0.3 | NaPF₆ | PC:EMC 3:7 | 92 | 0.348 | 10 |
| Example 21 | Compound 12 | 3 | FEC | 0.5 | 1.5 | NaPF₆ | PC:EMC 3:7 | 92 | 0.349 | 11 |
| Example 22 | Compound 12 | 3 | FEC | 1 | 3 | NaPF₆ | PC:EMC 3:7 | 93 | 0.351 | 11 |
| Example 23 | Compound 12 | 3 | FEC | 3 | 9 | NaPF₆ | PC:EMC 3:7 | 93 | 0.361 | 13 |
| Example 24 | Compound 12 | 3 | FEC | 4 | 12 | NaPF₆ | PC:EMC 3:7 | 89 | 0.377 | 16 |
| Example 25 | Compound 12 | 3 | FEC | 5 | 15 | NaPF₆ | PC:EMC 3:7 | 85 | 0.399 | 20 |
| Example 26 | Compound 12 | 3 | FEC | 10 | 30 | NaPF₆ | PC:EMC 3:7 | 81 | 0.479 | 38 |
| Example 27 | Compound 12 | 5 | FEC | 0.01 | 0.05 | NaPF₆ | PC:EMC 3:7 | 85 | 0.381 | 6 |
| Example 28 | Compound 12 | 2 | FEC | 5 | 10 | NaPF₆ | PC:EMC 3:7 | 83 | 0.396 | 26 |
| Example 29 | Compound 12 | 3 | VC | 2 | 6 | NaPF₆ | PC:EMC 3:7 | 94 | 0.361 | 12 |
| Example 30 | Compound 12 | 3 | DTD | 2 | 6 | NaPF₆ | PC:EMC 3:7 | 93 | 0.357 | 13 |
| Comparative example 1 | / | / | / | / | / | NaPF₆ | PC:EMC 3:7 | 61 | 0.352 | 45 |
| Comparative example 2 | DTD | 1 | / | / | / | NaPF₆ | PC:EMC 3:7 | 72 | 0.337 | 62 |

Lifespan of a sodium-ion battery cell is related to a capacity retention rate, where a higher capacity retention rate corresponds to a longer lifespan. Direct current resistance of a sodium-ion battery cell can characterize internal resistance of the sodium-ion battery cell, where a larger direct current resistance indicates a larger internal resistance. Gas production in a sodium-ion battery cell is related to a volume swelling rate, where more gas production corresponds to a larger volume swelling rate.

As shown in Examples 1 to 10, reasonably setting the percentage of the first additive allows the sodium-ion battery cell to achieve a better capacity retention rate; and as shown in Examples 1 to 9, setting the percentage of the first additive to 0.1 wt% to 5 wt% can improve lifespan of the sodium-ion battery while maintaining a low internal resistance.

As shown in Examples 11 to 16, various compounds conforming to general formula (I) can be added to the electrolyte as the first additive, improving lifespan of the sodium-ion battery.

As shown in Examples 17 to 26, adding the second additive to the electrolyte is beneficial to further improving lifespan of the sodium-ion battery.

As shown in Example 17, Examples 19 to 23, and Examples 27 and 28, reasonably setting the percentage of the first additive and the second additive can improve lifespan of the sodium-ion battery while maintaining a low internal resistance.

As shown in Examples 29 and 30, adding various different second additives to the electrolyte is beneficial to improving lifespan of the sodium-ion battery.

As shown in Examples 1 to 30 and Comparative example 1, Examples 1 to 30 exhibit a higher capacity retention rate and a lower volume swelling rate. Adding the first additive to the electrolyte is beneficial to improving lifespan of the sodium-ion battery and mitigating gas production phenomena.

As shown in Example 6 and Comparative example 2, Example 6 exhibits a higher capacity retention rate and a lower volume swelling rate. Compared to the compound represented by general formula (I) in the embodiment of this application, ethylene sulfate has a very strong coordination ability with sodium ions; during the formation stage, the negative electrode side rapidly reaches a low potential, and ethylene sulfate primarily forms a film on the negative electrode side, resulting in a small amount of residual ethylene sulfate that can act on the positive electrode, thus having an insignificant inhibitory effect on oxidation of the solvent in the electrolyte, making it difficult to improve lifespan of the sodium-ion battery cell. If the amount of ethylene sulfate is increased, on one hand, excessive film formation on the negative electrode leads to an increase in internal resistance of the sodium-ion battery cell; on the other hand, oxidation of ethylene sulfate produces many short-chain gaseous substances, such as ethylene, leading to significant gas production.

Based on the above examples, the technical solution of the embodiments of this application can improve lifespan of the sodium-ion battery cell and mitigate gas production phenomena, thereby being beneficial to enhancing performance of the sodium-ion battery cell.

This application is not limited to the foregoing embodiments. The foregoing embodiments are merely examples, and embodiments having substantially the same constructions and having the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. An electrolyte for a sodium-ion battery comprising a first additive, wherein the first additive comprises a compound represented by general formula (I), 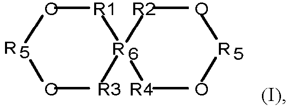 wherein R1, R2, R3, and R4 each independently comprise at least one of a single bond or an alkylene group having 1 to 4 carbon atoms, R5 comprises 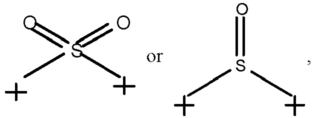 R6 comprises at least one of 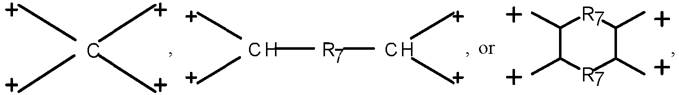 and R7 comprises at least one of a single bond, an alkylene group having 1 to 3 carbon atoms, or an alkoxyalkylene group having 1 to 3 carbon atoms.

2. The electrolyte according to claim 1, wherein a percentage W₁ of the first additive in the electrolyte, based on a total mass of the electrolyte, is 0.01% to 5%; optionally, 0.05% to 5%; and further optionally, 0.1% to 2%.

3. The electrolyte according to claim 1 or 2, wherein the compound (I) comprises at least one of the following compounds:

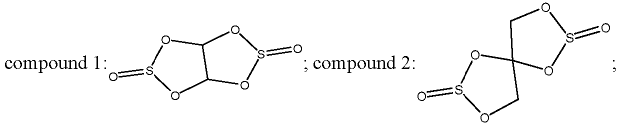

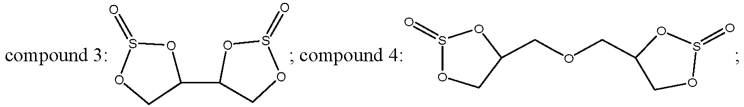

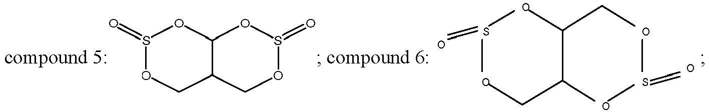

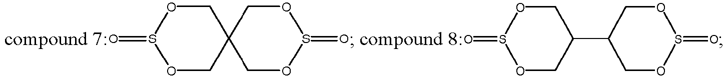

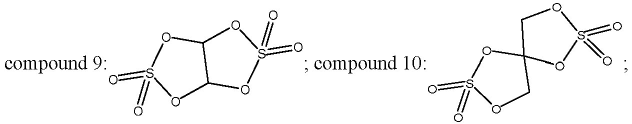

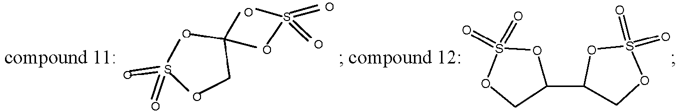

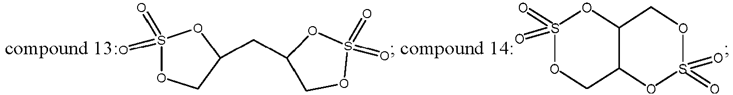

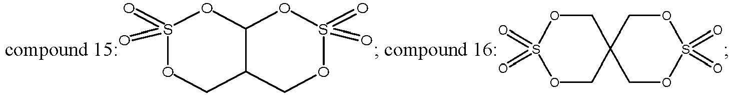

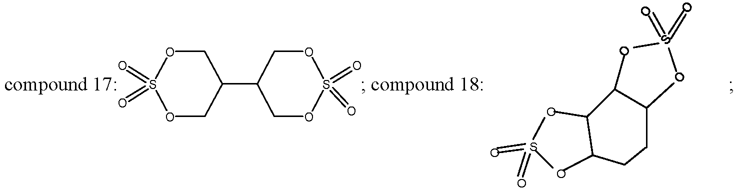

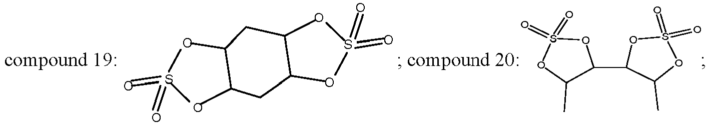

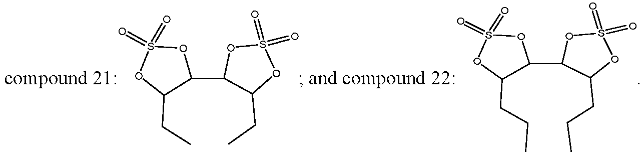

4. The electrolyte according to claim 3, wherein the compound (I) comprises at least one of compounds 9 to 22; and optionally, the compound (I) comprises at least one of compound 11, compound 12, or compound 13.

5. The electrolyte according to any one of claims 1 to 4, wherein the electrolyte further comprises a second additive, and the second additive comprises at least one of fluoroethylene carbonate, vinylene carbonate, vinyl ethylene carbonate, 1,3-propanesultone, prop-1-ene-1,3-sultone, ethylene sulfate, maleic anhydride, difluorooxalatoborate, succinic anhydride, or triallyl phosphate.

6. The electrolyte according to claim 5, wherein a percentage W₂ of the second additive in the electrolyte, based on a total mass of the electrolyte, is 0.01% to 10%; optionally, 0.1% to 5%.

7. The electrolyte according to claim 5 or 6, wherein the percentage W₁ of the first additive in the electrolyte and the percentage W₂ of the second additive in the electrolyte satisfy: 0.05×10⁻⁴ ≤ W₁×W₂ ≤ 10×10⁻⁴.

8. The electrolyte according to any one of claims 1 to 7, wherein the electrolyte further comprises an electrolytic salt, and the electrolytic salt comprises at least one of NaPF₆, NaBF₄, NaN(SO₂F)₂, NaClO₄, NaAsF₆, NaB(C₂O₄)₂, NaBF₂(C₂O₄), NaN(SO₂RF)₂, or NaN(SO₂F)(SO₂RF), wherein RF comprises C_{b}F_{2b+1}, and b is an integer from 1 to 10; optionally, the electrolytic salt comprises at least one of NaPF₆, NaN(SO₂F)₂, or NaBF₂(C₂O₄); and optionally, b is an integer from 1 to 3; optionally, RF comprises at least one of CF₃, C₂F₅, or CF₂CF₂CF₃.

9. The electrolyte according to any one of claims 1 to 8, **characterized in that** the electrolyte further comprises a solvent, and the solvent comprises at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, diethyl sulfone, 1,3-dioxolane, tetrahydrofuran, ethylene glycol dimethyl ether, or acetonitrile; and optionally, the solvent comprises at least one of propylene carbonate, ethylene carbonate, propylene carbonate, ethyl methyl carbonate, diethyl carbonate, dimethyl carbonate, dipropyl carbonate, methyl propyl carbonate, ethyl propyl carbonate, or butylene carbonate.

10. A sodium-ion battery cell, comprising the electrolyte according to any one of claims 1 to 9.

11. The sodium-ion battery cell according to claim 10, wherein the sodium-ion battery cell further comprises a positive electrode plate, and a positive electrode active material in the positive electrode plate comprises at least one of a Prussian blue analogue, a sodium-containing phosphate, a sodium-containing transition metal oxide, or a respective modified compound thereof; optionally, the Prussian blue analogue comprises a substance represented by a general formula NaₓP[R(CN)₆]_{δ}·zH₂O, wherein P and R each independently comprise at least one transition metal element, 0 < x ≤ 2, 0 < δ ≤ 1, and 0 ≤ z ≤ 10; optionally, the sodium-containing phosphate comprises a substance represented by a general formula NaₑMe_{c}(PO₄)_{d}O₂X, wherein Me comprises at least one transition metal element, X comprises at least one halogen element, 0 < e ≤ 4, 0 < c ≤ 2, and 1 ≤ d ≤ 3; optionally, the sodium-containing transition metal oxide comprises a substance represented by a general formula Na_{f}M_{g}FeₕO₂, wherein M comprises at least one transition metal element, 0.67 < f < 1.1, 0.5 < g < 1, and 0 < h < 0.5; optionally, the transition metal element comprises at least one of Ti, Cr, Mn, Fe, Co, Ni, V, Cu, or Zn; and optionally, the halogen element comprises at least one of F, Cl, or Br.

12. A secondary battery, comprising the sodium-ion battery cell according to claim 10 or 11.

13. An electric apparatus, comprising the secondary battery according to claim 12.
